# FASCICULE DE BREVET EUROPEEN

(11) **EP 2 176 078 B1**
(45) Date de publication et mention de la délivrance du brevet: **22.02.2012**
(21) Numéro de dépôt: 08837111.7
(22) Date de dépôt: 25.07.2008
(51) Int. Cl.: B60F 1/04, E02F 9/02

(54) **VEHICULE RAIL-ROUTE POUR VOIE FERREE ETROITE**
SCHIENEN-/STRASSENFAHRZEUG FÜR SCHMALSPURGLEISE
RAIL/ROAD VEHICLE FOR NARROW GAUGE RAILWAYS

(30) Priorité: 25.07.2007 FR 0705417
(43) Date de publication de la demande: 21.04.2010
(73) Titulaire: Francois, Pierre, 21600 Longvic (FR)
(72) Inventeur: PIERRE, François, F-21000 Dijon (FR); LLORCA, Vincent, F-21490 Bretigny (FR); CAZET, Pierre, F-21000 Dijon (FR)
(74) Mandataire: Oudin, Stéphane
(86) Numéro de dépôt international: PCT/FR2008/001121
(87) Numéro de publication internationale: WO 2009/047409

(56) Documents cités:
- AU-B2- 607 917
- DE-C1- 19 643 240
- FR-A- 2 467 718
- FR-A- 2 671 570
- FR-A- 2 723 552
- FR-A- 2 863 237

## Description

La présente invention concerne, d'une part, un véhicule rail-route, apte à se déplacer soit sur une route ou un chemin, soit sur des rails de chemin de fers, et qui est particulièrement destiné à l'entretien des voies étroites de réseaux ferroviaires, notamment de type métrique, et de leurs abords, et d'autre part, le procédé de passage dudit véhicule de la route aux rails et inversement.

On désigne ici par voie métrique une voie étroite de chemins de fers telle que l'écartement de ses rails, qui est la distance séparant le flanc interne des deux files de rails, est égal à 1 mètre. La voie normale, qui est la plus utilisée dans le monde (60 % des lignes), est telle que l'écartement de ses rails (dit standard ou international) est égal à 1,435 mètres. Les voies étroites sont, par conséquent, toutes les voies dont l'écartement des rails est inférieur à celui de la voie normale.

Ces voies étroites, notamment métriques, sont principalement installées dans des régions escarpées ou montagneuses, car un écartement des rails plus réduit permet d'avoir moins de terrassement, des virages plus serrés et de réaliser des tunnels moins larges. Ainsi, on trouve ce type de voies par exemple en France dans la région alpine, en Corse, et en Suisse.

Compte tenu de leur localisation géographique, ces voies étroites sont difficilement accessibles et donc peu ou pas entretenues.

Parmi ce type de véhicules, on connaît déjà une pelle rail-route à pneus, qui est apte à rouler sur une route ou un chemin et à se déplacer le long d'une voie ferrée normale. Cette pelle est telle que les axes de ses roues à pneus sont parallèles aux axes de ses roues ferroviaires. La pelle est d'abord positionnée, en roulant sur les roues à pneus, à cheval sur les rails, de sorte que les essieux des roues à pneus sont perpendiculaires aux rails et que chaque pneu se trouve à l'extérieur de la voie. Les roues ferroviaires sont alors simultanément appliquées sur les rails et mises en contact avec la partie interne des pneus grâce à des vérins hydrauliques. Les roues ferroviaires, qui sont ensuite entraînées en rotation par friction avec les pneus, permettent le déplacement de ladite pelle le long des rails de la voie ferrée.

Du fait du mode d'entraînement de ses roues ferroviaires, cette pelle connue présente l'inconvénient de ne pas pouvoir être équipée de chenilles et donc de ne pas pouvoir accéder à des régions escarpées ou montagneuses.

On connaît aussi un véhicule rail-route à pneus, comme celui décrit dans la demande de brevet FR 2 671 570, qui est semblable à celui présenté précédemment, mais dans lequel les roues ferroviaires possèdent leur propre transmission. Ce type de véhicule est complexe et peu compact.

Enfin, on connaît également un engin, comme celui décrit dans la demande de brevet FR 2 723 552, comportant un châssis supportant un plateau porte-outils et auquel est fixé un premier jeu de roues lui permettant de circuler sur route et un second jeu de roues lui permettant de circuler sur une voie ferrée. Lesdites roues ferroviaires sont reliées à un support articulé au châssis et mis en mouvement par des vérins. Toutefois, cet engin et ses supports de roues ferroviaires sont particulièrement encombrants.

La présente invention a pour but de remédier à ces divers inconvénients en proposant un véhicule rail-route compact, par exemple de type pelle mécanique, apte à se déplacer soit sur une route ou un chemin, par exemple avec des chenilles, soit sur des rails de chemin de fers, et qui est particulièrement destiné à l'entretien des voies étroites de réseaux ferroviaires, notamment de type métrique, et de leurs abords. Ce véhicule peut, grâce à ses chenilles, accéder sans difficulté à des régions escarpées ou montagneuses, pour réaliser tout type de travaux d'entretien sur et autour des voies ferrées.

A cet égard, la présente invention a pour objet un véhicule rail-route compact destiné à l'entretien des voies étroites de réseaux ferroviaires, comprenant un châssis horizontal sur lequel est positionnée une cabine de pilotage, pouvant pivoter autour d'un axe vertical, équipée d'un moteur et d'un outillage. Ce véhicule rail-route comprend, en outre, un groupe de puissance, au moins deux moyens de locomotion disposés de part et d'autre du châssis parallèlement au plan longitudinal vertical dudit châssis, comportant chacun une roue folle et une roue motrice, dont les axes respectifs sont perpendiculaires au plan longitudinal vertical dudit châssis, pouvant être mis en mouvement par le moteur et permettant le déplacement du véhicule rail-route sur une route ou un chemin. Le véhicule rail-route, est aussi équipé de deux essieux, articulés au châssis par au moins un pivot, et munis chacun de deux roues ferroviaires, pouvant être mis en mouvement autour dudit pivot par au moins un actionneur, perpendiculaire à l'axe longitudinal desdits essieux et articulé à l'une de ses extrémités au châssis et à l'autre extrémité à l'essieu, et permettant le déplacement du véhicule rail-route sur des rails de voie ferrée. Ce véhicule rail-route est remarquable en ce que les essieux sont disposés de part et d'autre de l'ensemble constitué par le châssis et les moyens de locomotion et les axes des roues ferroviaires s'étendant parallèlement au plan longitudinal vertical du châssis et en ce que le corps de chaque actionneur est logé dans un évidement à l'intérieur du châssis pour limiter l'encombrement hors-tout dudit véhicule rail-route.

Selon une autre caractéristique de l'invention, les moyens de locomotion sont des chenilles ou similaires, afin de pouvoir accéder à des régions escarpées.

Afin de garantir la motricité du véhicule rail-route sur les rails, quelle que soit la planéité desdits rails, chaque essieu comporte au moins une roue ferroviaire motorisée disposée de sorte que qu'il y ait au moins une roue motorisée par rail.

De même, pour remédier aux défauts de la voie ferrée (problèmes de jointure de rails et de différences d'altitude entre les rails), le véhicule rail-route selon l'invention sera avantageusement équipé d'essieux oscillants.

Afin de faire mieux ressortir d'autres avantages et caractéristiques de la présente invention, on décrira ci-après à titre d'exemple non limitatif, une forme d'exécution préférée de ladite invention, en référence aux dessins annexés sur lesquels :
- la figure 1 est une vue en perspective du véhicule rail-route avec les essieux repliés,
- la figure 2 est une vue agrandie en perspective d'un essieu et de son actionneur lorsque le véhicule rail-route est en position sur les rails après application des roues sur lesdits rails.

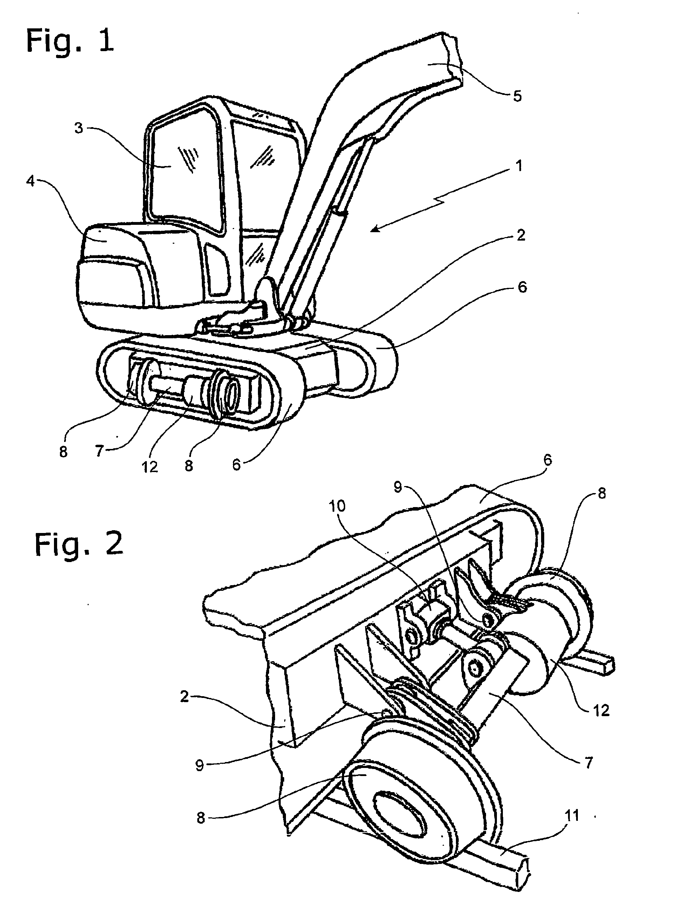

En référence aux figures 1 et 2, le véhicule rail-route 1 selon l'invention comprend un châssis 2 horizontal sur lequel est positionnée une cabine de pilotage 3, pouvant pivoter autour d'un axe vertical, équipée d'un moteur thermique 4 ou similaire et d'un outillage 5 de travaux publics. L'outillage 5 de travaux publics, en général hydraulique, peut être par exemple une pelle, une tarière, une fraise ou encore une trancheuse.

Le châssis 2 comporte, également, un groupe de puissance (non représenté) avantageusement hydraulique et d'au moins deux moyens de locomotion 6 disposés de part et d'autre du châssis 2, parallèlement au plan longitudinal vertical dudit châssis 2. Chaque moyen de locomotion 6 comprend une roue folle et une roue motrice, dont les axes respectifs sont perpendiculaires audit plan longitudinal vertical du châssis 2. Ces moyens de locomotion 6, pour permettre d'accéder à des régions escarpées, sont de préférence des chenilles ou analogues, qui sont entraînées par le moteur 4 via des roues motrices, par exemple un barbotin, et permettent par conséquent le déplacement dudit véhicule 1 sur une route ou un chemin.

Enfin, deux essieux 7, chacun munis de deux roues ferroviaires 8, sont articulés au châssis 2 par au moins un pivot 9. Il va de soi que pour avoir une articulation plus stable, il est préférable que les essieux 7 soient articulés autour de deux pivots 9 d'axes parallèles.

Ces deux essieux 7 sont disposés de part et d'autre de l'ensemble constitué par le châssis 2 et les moyens de locomotion 6, les axes des roues ferroviaires 8 s'étendant parallèlement au plan longitudinal vertical du châssis 2.

De plus, chaque essieu 7 peut être mis en mouvement autour desdits pivots 9 par au moins un actionneur 10, de préférence, disposé perpendiculairement à l'axe longitudinal de l'essieu 7 associé. Cet actionneur 10 est articulé à l'une de ses extrémités au châssis 2 et à l'autre extrémité à l'essieu 7, autour de pivots, dont les axes sont parallèles au plan longitudinal vertical du châssis 2.

Pour limiter l'encombrement hors-tout du véhicule rail-route 1, le corps de chaque actionneur 10 est avantageusement logé dans un évidement à l'intérieur du châssis 2. On désigne ici par corps de l'actionneur 10, la partie fixe dudit actionneur qui est articulé au châssis 2 et qui reçoit la partie mobile dudit actionneur 10, ladite partie mobile étant articulée à l'essieu 7. Cette configuration particulière garantit un encombrement hors-tout du véhicule rail-route 1 compatible avec le gabarit routier standard, et ne nécessite pas de transport exceptionnel pour amener ledit véhicule rail-route 1 depuis son entrepôt jusqu'au lieu d'intervention.

Chaque actionneur 10 est avantageusement un vérin double effet. En référence avec ce qui précède, pour limiter l'encombrement le véhicule, le corps du vérin est donc logé dans un évidement à l'intérieur du châssis 2 et est articulé au châssis 2 au niveau de l'extrémité d'où sort sa tige.

Lorsque sa tige est entièrement rentrée, l'essieu 7 associé se trouve en position haute de repos, ses roues ferroviaires 8 s'étendent alors au-dessus du plan d'appui des moyens de locomotion 6 et n'entravent pas, par conséquent, le déplacement du véhicule 1 sur lesdits moyens de locomotion 6. Au contraire, lorsque la tige de l'actionneur 10 est entièrement sortie, comme représenté à la figure 2, l'essieu 7 est alors en position basse de travail et ses roues ferroviaires 8 s'étendent en-dessous du plan d'appui des moyens de locomotion 6 et sont en contact avec les rails 11. De ce fait, dans cette dernière position, le véhicule 1 est soulevé des rails 11 et ne repose plus que sur les roues ferroviaires 8. Cette configuration permet donc le déplacement du véhicule 1 sur les rails 11 à l'aide des roues ferroviaires 8.

De plus, pour pouvoir résister aux charges mises en oeuvre, ces roues ferroviaires 8 sont de préférence métalliques.

Afin de bénéficier de l'énergie hydraulique produite par le groupe de puissance, déjà utilisée par la cabine de pilotage 3 et l'outillage 5, il est préférable que les actionneurs 10 soient des vérins hydrauliques à double effet. Bien sûr, ils peuvent être substitués par tout autre vérin tel que des vérins électriques ou analogues ou par tout autre moyen actionnement procurant des effets similaires.

Pour permettre le déplacement du véhicule 1 sur les rails 11, au moins une roue ferroviaire 8 de chaque essieu 7 est motorisée. Dans la variante d'exécution représentée, la roue ferroviaire 8 motorisée possède à cette fin un dispositif d'entraînement 12. Chaque dispositif d'entraînement 12 est avantageusement, pour la même raison que précédemment, un moteur hydraulique et est disposé coaxialement à l'essieu 7 associé, pour accroître la compacité du véhicule 1.

Pour garantir une motricité quelle que soit la position relative des deux rails 11, on disposera de préférence les roues motorisées des essieux en diagonale, de sorte qu'il y ait au moins une roue motorisée sur chacun des rails 11.

Selon une caractéristique particulièrement avantageuse du véhicule 1, chacune des roues ferroviaires 8 est motorisée.

Selon une variante de réalisation non représentée, et afin de remédier aux défauts de la voie ferrée (problèmes de jointure de rails et de différence d'altitude entre les rails), le véhicule 1 peut être avantageusement équipé d'essieux 7 oscillants autour d'un axe horizontal perpendiculaire au plan longitudinal vertical du châssis 2.

Enfin, selon une dernière variante de réalisation non représentée, et afin de permettre de se déplacer sur des voies étroites autres que la voie métrique, le véhicule 1 peut être avantageusement équipé d'essieux 7 extensibles le long de leur axes longitudinaux, permettant d'éloigner ou de rapprocher les roues ferroviaires 8 et par conséquent de s'adapter à différents écartements de rails 11.

Il va bien entendu de soi que l'Homme du Métier n'aura aucune difficulté à remplacer les chenilles par des roues de route pneumatiques ou similaires.

La présente invention a également pour objet le procédé de passage du véhicule rail-route 1, conforme à l'invention, de la route aux rails 11 et réciproquement.

Ce procédé de passage de la route aux rails comporte successivement les étapes suivantes :
- positionnement, à l'aide des moyens de locomotion 6, du véhicule 1, perpendiculairement aux rails 11 de la voie ferrée, essieux 7 sont en position haute ;
- mise en place du véhicule 1 sur les rails 11, à l'aide des moyens de locomotion 6 ;
- sortie partielle des tiges des actionneurs 10, de sorte à faire pivoter vers le sol les essieux 7 autour des pivots 9 et à approcher les roues ferroviaires 8 au plus près des rails 11 ;
- alignement des roues ferroviaires 8 au-dessus des rails 11, en utilisant si nécessaire l'outillage 5 qui peut, en prenant appui au sol entre les rails 11, soulever et faire pivoter l'une des extrémités du véhicule rail-route 1 afin de faciliter cette manoeuvre;
- sortie complète des tiges des actionneurs 10 de sorte à mettre en contact les roues ferroviaires 8 avec les rails 11 et à décoller les moyens de locomotion 6 desdits rails 11 ;
- mise en marche des dispositifs d'entraînement 12 des roues ferroviaires 8.

Il est préférable, lors de la phase de travail, de rentrer un peu les tiges des actionneurs 10 de sorte à descendre le véhicule rail-route 1 et à placer ses moyens de locomotion 6 juste au-dessus des rails 11 afin d'augmenter la stabilité du véhicule.

Pour procéder au passage des rails 11 à la route, il suffit de réaliser successivement les étapes suivantes :
- arrêt des dispositifs d'entraînement 12 pour immobiliser le véhicule 1 sur les rails 11 ;
- rentrée totale des tiges des actionneurs 10 de sorte à relever les essieux 7, à mettre progressivement en contact les moyens de locomotion 6 sur les rails 11 et à décoller les roues ferroviaires 8 desdits rails 11 ;
- mise en marche du moteur 4 pour quitter les rails 11 et rejoindre la route.

Enfin, il va bien entendu de soi que la présente invention n'est pas limitée à l'exemple de réalisation préférentiel décrit, mais qu'elle peut être modifiée ou adaptée en fonction des besoins ou des exigences particulières, sans pour autant sortir du cadre de l'invention.

## Revendications

1. Véhicule rail-route (1) compact destiné à l'entretien des voies étroites de réseaux ferroviaires et comprenant :
- un châssis (2) horizontal sur lequel est positionnée une cabine de pilotage (3), pouvant pivoter autour d'un axe vertical, équipée d'un moteur (4) et d'un outillage (5),
- un groupe de puissance,
- au moins deux moyens de locomotion (6) disposés de part et d'autre du châssis (2) parallèlement à son plan longitudinal vertical, comportant chacun une roue folle et une roue motrice dont les axes respectifs sont perpendiculaires audit plan longitudinal vertical, pouvant être mis en mouvement par le moteur (4) et permettant le déplacement du véhicule (1) sur une route ou un chemin,
- deux essieux (7), munis chacun de deux roues ferroviaires (8) et articulés au châssis par au moins un pivot (9), permettant le déplacement du véhicule (1) sur des rails (11) de voie ferrée,
- un actionneur (10) par essieu (7), disposé perpendiculaire à l'axe longitudinal dudit essieu (7) et articulé à l'une de ses extrémités au châssis (2) et à l'autre extrémité à l'essieu (7), destiné à mettre en mouvement l'essieu (7) autour dudit pivot (9),
**caractérisé en ce que** les essieux (7) sont disposés de part et d'autre de l'ensemble constitué par le châssis (2) et les moyens de locomotion (6), les axes des roues ferroviaires (8) s'étendant parallèlement au plan longitudinal vertical dudit châssis (2) et **en ce que** le corps de chaque actionneur (10) est logé dans un évidement à l'intérieur du châssis (2) pour limiter l'encombrement hors-tout dudit véhicule rail-route (1).

2. Véhicule rail-route (1) suivant la revendication 1, **caractérisé en ce qu'**au moins une roue ferroviaire (8) par essieu (7) est motorisée par un dispositif d'entraînement (12).

3. Véhicule rail-route (1) suivant l'une quelconque des revendications 1 ou 2, **caractérisé en ce que** les roues ferroviaires (8) sont disposées de manière à avoir, en contact avec chaque rail (11), au moins une roue ferroviaire (8) motorisée.

4. Véhicule rail-route (1) suivant l'une quelconque des revendications 1 à 3, **caractérisé en ce que** les dispositifs d'entraînement (12) sont des moteurs hydrauliques.

5. Véhicule rail-route (1) suivant l'une quelconque des revendications précédentes, **caractérisé en ce que** chaque actionneur (10) met en mouvement autour du pivot (9) l'essieu (7) associé depuis une position haute de repos, où les roues ferroviaires (8) dudit essieu (7) s'étendent au-dessus du plan d'appui des moyens de locomotion (6), jusqu'à une position basse de travail, où lesdites roues ferroviaires (8) s'étendent en-dessous dudit plan d'appui et sont en contact avec les rails (11).

6. Véhicule rail-route (1) suivant l'une quelconque des revendications précédentes, **caractérisé en ce que** chacun des essieux (7) est articulé au châssis (2) autour de deux pivots (9).

7. Véhicule rail-route (1) suivant l'une quelconque des revendications précédentes, **caractérisé en ce que** les actionneurs (10) sont des vérins à double effet.

8. Véhicule rail-route (1) suivant l'une quelconque des revendications précédentes, **caractérisé en ce que** les actionneurs (10) sont des vérins hydrauliques.

9. Véhicule rail-route (1) suivant l'une quelconque des revendications précédentes, **caractérisé en ce que** les essieux (7) sont oscillants autour d'un axe perpendiculaire au plan longitudinal vertical du châssis (2).

10. Véhicule rail-route (1) suivant l'une quelconque des revendications précédentes, **caractérisé en ce que** chacun des essieux (7) est extensible le long de son axe longitudinal.

11. Véhicule rail-route (1) suivant l'une quelconque des revendications précédentes, **caractérisé en ce que** les moyens de locomotion (6) sont des chenilles entraînées par une roue motrice de type barbotin.

12. Procédé de passage de la route aux rails (11) du véhicule rail-route (1) suivant l'une quelconque des revendications précédentes, **caractérisé en ce qu'**il comporte successivement des étapes suivantes :
- positionnement, à l'aide des moyens de locomotion (6), du véhicule (1), perpendiculairement aux rails (11) de la voie ferrée, essieux (7) sont en position haute ;
- mise en place du véhicule (1) sur les rails (11), à l'aide des moyens de locomotion (6) ;
- sortie partielle des tiges des actionneurs (10), de sorte à faire pivoter vers le sol les essieux (7) autour des pivots (9) et à approcher les roues ferroviaires (8) au plus près des rails (11) ;
- alignement des roues ferroviaires (8) au-dessus des rails (11), en utilisant si nécessaire l'outillage (5) qui peut, en prenant appui au sol entre les rails (11), soulever et faire pivoter l'une des extrémités du véhicule rail-route (1) afin de faciliter cette manoeuvre ;
- sortie complète des tiges des actionneurs (10) de sorte à mettre en contact les roues ferroviaires (8) avec les rails (11) et à décoller les moyens de locomotion (6) desdits rails (11) ;
- mise en marche des dispositifs d'entraînement (12) des roues ferroviaires (8).

13. Procédé de passage des rails (11) à la route du véhicule rail-route (1) suivant l'une quelconque des revendications 1 à 11, **caractérisé en ce qu'**il comporte successivement des étapes suivantes :
- arrêt des dispositifs d'entraînement (12) pour immobiliser le véhicule (1) sur les rails (11) ;
- rentrée totale des tiges des actionneurs (10) de sorte à relever les essieux (7); à mettre progressivement en contact les moyens de locomotion (6) sur les rails (11) et à décoller les roues ferroviaires (8) desdits rails (11) ;
- mise en marche du moteur (4) pour quitter les rails (11) et rejoindre la route.

## Claims

1. Compact rail/road vehicle (1) intended for the maintenance of narrow gauge tracks forming part of railway networks and including:
- a horizontal chassis (2) whereon is positioned a driver's cab (3), able to pivot around a vertical axis, provided with an engine (4) and tools (5),
- a power unit,
- at least two transportation means (6) arranged on either side of the chassis (2) parallel to its vertical longitudinal plane, comprising each an idle wheel and a drive wheel of which the respective axes are perpendicular to said vertical longitudinal plane, which can be moved by the engine (4) and enabling the vehicle (1) to travel on a road or a path,
- two axles (7), each provided with two railway wheels (8) and hinged to the chassis by at least one pivot (9), enabling the vehicle (1) to travel on rails (11),
- an actuator (10) per axle (7), arranged perpendicular to the longitudinal axis of said axle (7) and hinged at one of its ends to the chassis (2) and at the other end to the axle (7), intended to move the axle (7) around said pivot (9),
**characterised in that** the axles (7) are arranged on either side of the assembly formed by the chassis (2) and the transportation means (6), the axes of the railway wheels (8) extending parallel to the vertical longitudinal plane of said chassis (2) and **in that** the body of each actuator (10) is housed in a recess inside the chassis (2) in order to limit the overall size of the rail/road vehicle (1).

2. Rail/road vehicle (1) according to claim 1, **characterised in that** at least one railway wheel (8) per axle (7) is motorised by a drive device (12).

3. Rail/road vehicle (1) according to any of claims 1 or 2, **characterised in that** the railway wheels (8) are arranged in such a way as to have, in contact with each rail (11), at least one motorised railway wheel (8).

4. Rail/road vehicle (1) according to any of claims 1 to 3, **characterised in that** the drive devices (12) are hydraulic engines.

5. Rail/road vehicle (1) according to any of the preceding claims, **characterised in that** each actuator (10) moves around the pivot (9) the associated axle (7) from a high idle position, where the railway wheels (8) of said axle (7) extend above the support plane of the transportation means (6), to a low working position, where said railway wheels (8) extend below said support plane and are in contact with the rails (11).

6. Rail/road vehicle (1) according to any of the preceding claims, **characterised in that** each of the axles (7) is hinged to the chassis (2) around two pivots (9).

7. Rail/road vehicle (1) according to any of the preceding claims, **characterised in that** the actuators (10) are double-acting jacks.

8. Rail/road vehicle (1) according to any of the preceding claims, **characterised in that** the actuators (10) are hydraulic jacks.

9. Rail/road vehicle (1) according to any of the preceding claims, **characterised in that** the axles (7) are oscillating around an axis perpendicular to the vertical longitudinal plane of the chassis (2).

10. Rail/road vehicle (1) according to any of the preceding claims, **characterised in that** each of the axles (7) is extendable along its longitudinal axis.

11. Rail/road vehicle (1) according to any of the preceding claims, **characterised in that** the transportation means (6) are tracks driven by a drive wheel of the bull wheel type.

12. Method for passing from road to rail (11) of the rail/road vehicle (1) according to any of the preceding claims, **characterised in that** it successively comprises the following steps:
- positioning, using the transportation means (6), of the vehicle (1), perpendicularly to the rail (11) of the railroad, axles (7) are in high position;
- setting the vehicle (1) in place on the rails (11), using the transportation means (6) ;
- partial withdrawal of the rods of the actuators (10), in such a way as to pivot toward the ground the axles (7) around pivots (9) and to approach the railway wheels (8) as close as possible to the rails (11) ;
- aligning of the railway wheels (8) above the rails (11), by using if required the tools (5) which can, by taking support on the ground between the rails (11), raise and pivot one of the ends of the rail/road vehicle (1) in order to facilitate this manoeuvre;
- full withdrawal of the rods of the actuators (10) in such a way as to place into contact the railway wheels (8) with the rails (11) and to lift off the transportation means (6) from said rails (11) ;
- activation of the drive devices (12) of the railway wheels (8).

13. Method for passing from rail (11) to road of the rail/road vehicle (1) according to any of claims 1 to 11, **characterised in that** it successively comprises the following steps:
- stopping the drive devices (12) in order to immobilise the vehicle (1) on the rails (11) ;
- full entry of the rods of the actuators (10) in such a way as to raise the axles (7); place progressively into contact the transportation means (6) on the rails (11) and to lift off the railway wheels (8) from said rails (11) ;
- activation of the engine (4) in order to leave the rails (11) and reach the road.

## Patentansprüche

1. Kompaktes Schienen-/Straßenfahrzeug, bestimmt zur Wartung der Schmalspuren von Eisenbahnnetzen und umfassend:
- ein horizontales Fahrgestell (2), auf dem eine Führerkabine (3) angebracht ist, die sich um eine vertikale Achse drehen kann, ausgestattet mit einem Motor (4) und mit einem Werkzeug (5),
- einen Generator,
- mindestens zwei Fortbewegungsmittel (6), die auf beiden Seiten des Fahrgestells (2) angebracht sind, parallel zu seiner vertikalen Längsebene, umfassend jeweils ein leer laufendes Rad und ein angetriebenes Rad, deren entsprechende Achsen senkrecht zur vertikalen Längsebene sind und vom Motor (4) in Bewegung gesetzt werden können und die Verschiebung des Fahrzeugs (1) auf einer Straße oder einem Weg ermöglichen.
- zwei Radachsen (7), ausgestattet jeweils mit zwei Schienenrädern (8) und gelenkig verbunden mit dem Fahrgestell durch mindestens einen Drehzapfen (9), der die Verschiebung des Fahrzeugs (1) auf den Schienen (11) des Schienenwegs ermöglicht,
- einen Auslöser (10) pro Radachse (7), senkrecht zur Längsachse der Radachse (7) angeordnet und gelenkig verbunden an einem seiner Enden mit dem Fahrgestell (2) und am anderen Ende mit der Radachse (7), dazu ausgelegt, die Radachse (7) um den Drehzapfen (9) zu bewegen,
**dadurch gekennzeichnet, dass** die Radachsen (7) auf beiden Seiten der Einheit angeordnet sind, die aus dem Fahrgestell (2) und den Fortbewegungsmittel (6) bestehen, wobei sich die Achsen der Schienenräder (8) parallel zur vertikalen Längsebene des Fahrgestells (2) erstrecken, und dadurch, dass der Körper jedes Auslösers (10) in einer Aussparung im Innern des Fahrgestells (2) angeordnet ist, um die Gesamt-Standfläche des Schienen-/Straßenfahrzeugs (1) zu begrenzen.

2. Schienen-/Straßenfahrzeug (1) nach Anspruch 1, **dadurch gekennzeichnet, dass** mindestens ein Schienenrad (8) pro Radachse (7) durch eine Antriebsvorrichtung (12) motorisiert ist.

3. Schienen-/Straßenfahrzeug (1) nach einem der Ansprüche 1 oder 2, **dadurch gekennzeichnet, dass** die Schienenräder (8) so angeordnet sind, dass sie, in Kontakt mit jeder Schiene (11), mindestens ein motorisiertes Schienenrad (8) aufweisen.

4. Schienen-/Straßenfahrzeug (1) nach einem der Ansprüche 1 bis 3, **dadurch gekennzeichnet, dass** die Antriebsvorrichtungen (12) hydraulische Motoren sind.

5. Schienen-/Straßenfahrzeug (1) nach einem der vorhergehenden Ansprüche, **dadurch gekennzeichnet, dass** jeder Auslöser (10) um den Drehzapfen (9) die assoziierte Radachse (7) aus einer oberen Ruheposition, in der sich die Schienenräder (8) der Radachse (7) über der Auflageebene der Fortbewegungsmittel (6) erstrecken, in eine untere Arbeitsposition in Bewegung setzt, in der sich die Schienenräder (8) unter der Auflageebene erstrecken und mit den Schienen (11) in Kontakt stehen.

6. Schienen-/Straßenfahrzeug (1) nach einem der vorhergehenden Ansprüche, **dadurch gekennzeichnet, dass** jede der Radachsen (7) gelenkig mit dem Fahrgestell (2) um zwei Drehzapfen (9) verbunden ist.

7. Schienen-/Straßenfahrzeug (1) nach einem der vorhergehenden Ansprüche, **dadurch gekennzeichnet, dass** die Auslöser (10) doppelt wirkende Arbeitszylinder sind.

8. Schienen-/Straßenfahrzeug (1) nach einem der vorhergehenden Ansprüche, **dadurch gekennzeichnet, dass** die Auslöser (10) hydraulische Arbeitszylinder sind.

9. Schienen-/Straßenfahrzeug (1) nach einem der vorhergehenden Ansprüche, **dadurch gekennzeichnet, dass** die Radachsen (7) um eine Achse schwingen, die senkrecht zur vertikalen Längsebene des Fahrgestells (2) ist.

10. Schienen-/Straßenfahrzeug (1) nach einem der vorhergehenden Ansprüche, **dadurch gekennzeichnet, dass** jede der Radachsen (7) entlang ihrer Längsachse ausziehbar ist.

11. Schienen-/Straßenfahrzeug (1) nach einem der vorhergehenden Ansprüche, **dadurch gekennzeichnet, dass** die Fortbewegungsmittel (6) Raupenfahrwerke sind, die durch ein Antriebsrad vom Typ Kettenrolle angetrieben werden.

12. Verfahren zum Übergang des Schienen-/Straßenfahrzeugs (1) von der Straße auf die Schienen (11) nach einem der vorhergehenden Ansprüche, **dadurch gekennzeichnet, dass** es aufeinander folgend die folgenden Schritte umfasst:
- Positionieren des Fahrzeugs (1) mit Hilfe der Fortbewegungsmittel (6) senkrecht zu den Schienen (11) des Schienenwegs, wobei sich die Achsen in der oberen Position befinden;
- Anbringen des Fahrzeugs (1) auf den Schienen (11) mit Hilfe der Fortbewegungsmittel (6);
- teilweises Ausfahren der Stangen der Auslöser (10), um die Radachsen (7) um Drehzapfen (9) auf den Boden hin drehen zu lassen und die Schienenräder (8) so weit wie möglich an die Schienen (11) anzunähern;
- Ausfluchten der Schienenräder (8) über den Schienen (11) unter Verwendung, falls erforderlich, des Werkzeugs (5), das, in dem es sich auf den Boden zwischen den Schienen (11) stützt, eines der Enden des Schienen-/Straßenfahrzeugs (1) anheben und drehen lassen kann, um diese Betätigung zu erleichtern;
- vollständiges Ausfahren der Stangen der Auslöser (10), um die Schienenräder (8) mit den Schienen (11) in Kontakt zu bringen, und um die Fortbewegungsmittel (6) der Schienen (11) abzuheben;
- In-Betrieb-Setzen der Antriebsvorrichtungen (12) der Schienenräder (8).

13. Verfahren zum Übergang des Schienen-/Straßenfahrzeugs (1) von den Schienen auf die Straße nach einem der Ansprüche, 1 bis 11, **dadurch gekennzeichnet, dass** es aufeinander folgend die folgenden Schritte umfasst:
- Anhalten der Antriebsvorrichtungen (12), um das Fahrzeug (1) auf den Schienen (11) zu blockieren;
- vollständiger Rückzug der Stangen der Auslöser (10), um die Radachsen (7) wieder zu heben; um schrittweise die Bewegungsmittel (6) auf den Schienen (11) in Kontakt zu bringen und die Schienenräder (8) der Schienen (11) abzuheben;
- In-Betrieb-Setzen des Motors (4), um die Schienen (11) zu verlassen und wieder auf die Straße zu gelangen.
